(19)

**Europäisches Patentamt**

**European Patent Office**

**Office européen des brevets**

(11) **EP 3 956 820 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **20717862.5**

(22) Anmeldetag: **08.04.2020**

(51) Internationale Patentklassifikation (IPC):
**G06N 3/045** (2023.01)      **G06N 3/0985** (2023.01)
**G06N 5/00** (2023.01)      **G06N 7/00** (2023.01)

(52) Gemeinsame Patentklassifikation (CPC):
**G06N 3/045; G06N 3/0985;** G06N 5/01; G06N 7/01

(86) Internationale Anmeldenummer:
**PCT/EP2020/060012**

(87) Internationale Veröffentlichungsnummer:
**WO 2020/212220 (22.10.2020 Gazette 2020/43)**

(54) **VERFAHREN, VORRICHTUNG UND COMPUTERPROGRAMM ZUM ERSTELLEN EINES NEURONALEN NETZES**

METHOD, DEVICE AND COMPUTER PROGRAM FOR CREATING A NEURONAL NETWORK

PROCÉDÉ, DISPOSITIF ET PROGRAMME INFORMATIQUE DE CRÉATION D'UN RÉSEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019 DE 102019205729**
**08.05.2019 DE 102019206620**

(43) Veröffentlichungstag der Anmeldung:
**23.02.2022 Patentblatt 2022/08**

(73) Patentinhaber: **Robert Bosch GmbH**
**70442 Stuttgart (DE)**

(72) Erfinder:
- **HUTTER, Frank**
**79110 Freiburg (DE)**
- **MARRAKCHI, Yassine**
**79222 Freiburg (DE)**
- **SAIKIA, Tonmoy**
**79108 Freiburg (DE)**
- **ZELA, Arber**
**79189 Bad Krotzingen (DE)**
- **BROX, Thomas**
**79108 Freiburg (DE)**

(56) Entgegenhaltungen:
**WO-A1-2016/122787      CN-A- 109 615 073**
**US-A1- 2019 095 798**

- **HANXIAO LIU ET AL: "DARTS: Differentiable Architecture Search", ARXIV.ORG, CORNELL UNIVERSITY LIBRARY, 201 OLIN LIBRARY CORNELL UNIVERSITY ITHACA, NY 14853, 24. Juni 2018 (2018-06-24), XP081200634, in der Anmeldung erwähnt**
- **STEFAN FALKNER ET AL: "BOHB: Robust and Efficient Hyperparameter Optimization at Scale", ARXIV.ORG, CORNELL UNIVERSITY LIBRARY, 201 OLIN LIBRARY CORNELL UNIVERSITY ITHACA, NY 14853, 4. Juli 2018 (2018-07-04), XP081244146, in der Anmeldung erwähnt**
- **Olaf Ronneberger ET AL: "U-Net: Convolutional Networks for Biomedical Image Segmentation" In: "12th European Conference on Computer Vision, ECCV 2012", 1. Januar 2015 (2015-01-01), Springer Berlin Heidelberg, Berlin, Heidelberg 031559, XP055698735, ISSN: 0302-9743 ISBN: 978-3-642-36741-0 Bd. 9351, Seiten 234-241, DOI: 10.1007/978-3-319-24574-4_28, in der Anmeldung erwähnt das ganze Dokument**
- **THOMAS ELSKEN ET AL: "Neural Architecture Search: A Survey", ARXIV.ORG, CORNELL UNIVERSITY LIBRARY, 201 OLIN LIBRARY CORNELL UNIVERSITY ITHACA, NY 14853, 16. August 2018 (2018-08-16), XP081201051,**

- **HIEU PHAM ET AL: "Efficient Neural Architecture Search via Parameter Sharing", ARXIV.ORG, CORNELL UNIVERSITY LIBRARY, 201 OLIN LIBRARY CORNELL UNIVERSITY ITHACA, NY 14853, 9. Februar 2018 (2018-02-09), XP080856169,**
- **Barret Zoph ET AL: "Learning Transferable Architectures for Scalable Image Recognition", , 11. April 2018 (2018-04-11), XP055617714, DOI: 10.1109/CVPR.2018.00907 Gefunden im Internet: URL:https://arxiv.org/pdf/1707.07012.pdf [gefunden am 2019-09-03]**

**Beschreibung**

Technisches Gebiet

Die Erfindung betrifft ein Verfahren zum Optimieren einer Architektur und einer Parametrisierung eines neuronalen Netzes. Ebenso betrifft die Erfindung eine Vorrichtung und ein Computerprogramm, die jeweils eingerichtet sind, das Verfahren auszuführen.

Stand der Technik

Liu, Hanxiao, Karen Simonyan und Yiming Yang: "DARTS: Differentiable architecture search." arXiv preprint arXiv:1806.09055 (2018) offenbaren ein Verfahren, um eine Architektur eines neuronalen Netzes mittels eines Gradientenabstiegsverfahren zu optimieren.

Falkner, Stefan, Aaron Klein und Frank Hutter: "BOHB: Robust and efficient hyperparameter optimization at scale." arXivpreprint arXiv:1807.01774 (2018) offenbaren ein Verfahren um Hyperparameter eines neuronalen Netzes mittels einer Kombination aus einer Bayes'schen Optimierung und einem Hyperband-Optimierungsalgorithmus zu optimieren.

Olaf Ronneberger, Philipp Fischer und Thomas Brox: " U-Net: Convolutional Networks for Biomedical Image Segmentation." arXiv preprint arXiv: 1505.04597 (2018) offenbaren eine Architektur eines neuronalen Netzes mit Faltungsschichten und Überbrückungsverbindungen (engl. skip connection), welches als U-Net bezeichnet wird.

Aus der CN 109 615 073 A ist ein Konstruktionsverfahren eines neuronalen Netzmodells zur Realisierung einer Bildklassifikation bekannt. Das Konstruktionsverfahren umfasst die folgenden Schritte: S1, Konstruieren eines Einheitsstruktur-Suchnetzes, eines Systemstruktur-Suchnetzes, eines Bildtrainings-Satzes und eines Zufallscodierungs-Arrays; S2, Erzeugen eines neuronalen Netzmodells unter Verwendung des Einheitsstruktur-Suchnetzes, des Systemstruktur-Suchnetzes und des Zufallscodierungs-Arrays; S3, Eingeben des Bildtrainings-Satzes in ein neuronales Netzmodell, um ein tatsächliches Klassifikationsergebnis zu erhalten; S4, Beurteilen, ob ein tatsächliches Klassifizierungsergebnis eine voreingestellte Bedingung erfüllt oder nicht, und wenn nicht, Durchführen eines Schritts S5; S5, Aktualisieren des Einheitsstruktur-Suchnetzes und des Systemstruktur-Suchnetzes gemäß dem tatsächlichen Klassifizierungsergebnis und der theoretischen Klassifizierung des Bildtrainingsatzes; S6, Wiederholen von S2; und S5, bis das im Schritt S4 erhaltene tatsächliche Klassifizierungsergebnis die voreingestellte Bedingung erfüllt.

Aus der US 2019/095798 A1 sind Computersysteme und -verfahren zum Erzeugen ein stochastisches kategorisches Autoencoder-Lernnetzwerk (SCAN) bekannt. Das SCAN wird so trainiert, dass es über ein Kodierernetzwerk verfügt, das unter Berücksichtigung einer oder mehrerer Einschränkungen Parameter für parametrische Wahrscheinlichkeitsverteilungen von Stichproben-Zufallsvariablen aus Eingangsdaten ausgibt.

Vorteile der Erfindung

Momentan ist es extrem aufwendig bis gar unmöglich, eine Architektur von neuronalen Netzen, die einen Kodierer und einen Dekodierer umfassen, zu optimieren. Denn die bekannten Methoden sind nicht in der Lage, diese komplexe Optimierung mit nur einer Graphikkarte (GPU) innerhalb einer vertretbaren Zeit durchzuführen. Daher wird die Architektur dieser neuronalen Netze entweder von Experten designt oder es werden nur kleine neuronale Netze automatisiert optimiert. Jedoch ist es wünschenswert, auch Architekturen komplexer neuronaler Netze mit Kodierer und Dekodierer zu optimieren, sodass diese auch anspruchsvollere Aufgaben durchführen können, wie z.B. eine Tiefenbestimmung von Objekten aus zwei Stereobildern oder eine semantische Segmentierung von Bildern. Ebenso ist es nicht möglich, eine Architektur der oben genannten U-Nets zu optimieren.

Das Verfahren mit den Merkmalen des unabhängigen Anspruchs 1 hat demgegenüber den Vorteil, dass dieses Verfahren es erstmals ermöglicht computerressourceneffizient die Architektur von komplexen neuronalen Netze mit Kodierer und Dekodierer und mit ggf. Überbrückungsverbindungen zu optimieren.

Offenbarung der Erfindung

In einem ersten Aspekt der Erfindung wird ein, insbesondere computerimplementiertes, Verfahren zum Erstellen eines neuronalen Netzes, welches einen Kodierer, der mit einem Dekodierer verbunden ist, umfasst gemäß des unabhängigen Anspruchs 1 vorgestellt.

Das Verfahren umfasst unter anderem die folgenden Schritte: Bereitstellen jeweils einer Auflösung von Eingangsgrößen und Ausgangsgrößen des Kodierers und des Dekodierers. Daraufhin folgt ein Bereitstellen unterschiedlicher Zell-Typen. Jeder Zell-Typ umfasst eine Mehrzahl von Konten, die nach einer vorgebbaren Reihenfolge beginnend bei zumindest einem Eingangsknoten und endend bei einem Ausgangsknoten verbunden sind. Jeder Knoten ist mit all seinen vorhergehenden Knoten mittels gerichteten Kanten verbunden. Unter gerichteten Kanten kann verstanden werden, dass diese Kanten Informationen nur in eine Richtung verarbeiten. Jeder Kante ist eine Mehrzahl von parametrisierbaren Operationen zugeordnet und allen Operationen ist jeweils eine erste Größe zugeordnet. Die Kanten sind eingerichtet, eine Zwischengröße des vorhergehenden Knotens jeweils mittels jeder der ihr zugeordneten Operationen zu verarbeiten und in Abhängigkeit der der jeweiligen Operation zugeordneten ersten Größe gewichtet aufzusummieren und an den nachfolgenden verbundenen Knoten als dessen Zwischengröße bereitzustellen. Ein erster Zell-Typ (engl. reduction cell) ist eingerichtet, die Auflösung seiner Ausgangsgröße relativ zu der Auflösung seiner Eingangsgröße zu reduzieren. Ein zweiter Zell-Typ (engl. upsampling cell) ist eingerichtet, die Auflösung seiner Ausgangsgröße relativ zu der Auflösung seiner Eingangsgröße zu erhöhen.

Daraufhin folgt ein Aneinanderreihen einer Mehrzahl von Zellen der unterschiedlichen Zell-Typen, sodass die bereitgestellten Auflösungen erzielt werden. Daraufhin folgt ein Bereitstellen von Trainingsdaten, die Trainingseingangsgrößen und jeweils den Trainingseingangsgrößen zugeordneten Trainingsausgangsgrößen umfassen. Daraufhin folgt ein alternierendes Anpassen der ersten Größen und einer Parametrisierung der parametrisierbaren Operationen. Das Anpassen erfolgt derart, dass eine Differenz zwischen Ausgangsgrößen, die mittels eines Propagierens der Trainingseingangsgrößen entlang der aneinandergereihten Zellen ermittelt werden, und den Trainingsausgangsgrößen optimiert wird, insbesondere bis ein vorgebbares Kriterium erfüllt ist. Daraufhin folgt ein Auswählen jeweils einer der Operationen der Kanten abhängig von den angepassten ersten Größen. Daraufhin folgt ein Erstellen des neuronalen Netzes in Abhängigkeit der aneinandergereihten Zellen und der ausgewählten Operationen.

Unter einem Kodierer kann eine erste vorgebbare Abfolge von Schichten des neuronalen Netzes verstanden werden, wobei die Abfolge eingerichtet ist, abhängig von der Eingangsgröße des Kodierers die Ausgangsgröße des Kodierers zu ermitteln, wobei die Auflösung der Ausgangsgröße geringer ist als die Auflösung der Eingangsgröße.

Unter einem Dekodierer kann eine zweite Abfolge von Schichten des neuronalen Netzes verstanden werden, die mit der ersten Abfolge der Schichten verbunden sind. Die zweite Abfolge der Schichten ist eingerichtet, abhängig von der Eingangsgröße des Dekodierers, also der Ausgangsgröße des Kodierers, die Ausgangsgröße des Dekodierers zu ermitteln, wobei die Auflösung der Ausgangsgröße des Dekodierers größer als die Auflösung der Eingangsgröße des Dekodierers ist.

Unter einer Auflösung kann eine räumliche Auflösung der jeweiligen Eingangsgröße oder Zwischengröße verstanden werden. Vorzugsweise charakterisiert die Auflösung eine Anzahl von Datenpunkten, die die Eingangs- oder Zwischengröße umfasst. Ist die Eingangsgröße zumindest ein Bild, dann kann die Auflösung durch eine Anzahl von Pixel gegeben sein.

Unter einem alternierenden Anpassen kann verstanden werden, dass nacheinander die Parametrisierung und die ersten Größen, insbesondere mit einer oder mehreren Iterationen, optimiert werden.

Unter einer Differenz kann ein math. Abstandsmaß verstanden werden, dass einen Unterschied zwischen den ermittelten Ausgangsgrößen und den Trainingsausgangsgrößen, insbesondere abhängig von der Parametrisierung und den ersten Größen, charakterisiert. Bevorzugt wird die Differenz mittels einer Kostenfunktion (engl. loss function) ermittelt.

Unter einem Propagieren kann verstanden werden, dass eine Eingangsgröße sukzessive von den Zellen verarbeitet wird.

Denkbar ist, dass neben der Auflösung weitere Informationen bereitgestellt werden, wie z.B. eine vorgebbare Anordnung von Schichten des neuronalen Netzes oder ein Aufbau des neuronalen Netzes.

Unter einer Zelle kann ein gerichteter Graph ohne Zyklus mit einer vorgebbaren Anzahl von Knoten verstanden werden.

Denkbar sind auch mehr als ein Eingangsknoten eines jeden Zell-Typs. Der Vorteil hierbei ist, dass damit auch neuronale Netze mit einer Vielzahl von Überbrückungsverbindungen optimiert werden können.

Der Vorteil des Verfahrens des ersten Aspektes ist, dass durch den zweiten Zell-Typ es ermöglicht wird, skalierbar neuronale Netze mit Kodierer und Dekodierer zu optimieren.

Es wird vorgeschlagen, dass das neuronale Netz zusätzlich in Abhängigkeit von der angepassten Parametrisierung der ausgewählten Operationen erstellt wird.

Die Zwischengröße der Knoten kann eine Summe über alle des jeweiligen Knoten bereitgestellten Zwischengrößen, insbesondere der Kanten, die mit diesem Knoten verbunden sind, sein. Die Ausgangsgröße des Ausgangsknoten kann jede bereitgestellte Zwischengröße der Knoten enthalten, die mit dem Ausgangsknoten verbunden sind. Vorzugsweise sind alle Zwischengrößen der Knoten, die mit dem Ausgangsknoten verbunden sind, zu der Ausgangsgröße des Ausgangsknotens zusammengefasst.

Weiterhin wird vorgeschlagen, dass der zweite Zell-Typ ferner eingerichtete ist, die Eingangsgröße des Eingangsknoten zu interpolieren, insbesondere mittels einer parametrisierbaren Operation, wie z.B. einer transponierten Faltung (engl. transposed convolution). Im Folgenden kann unter interpolieren verstanden werden, dass die, insbesondere räumliche, Auflösung zu nimmt, bspw. um einen Faktor 2.

Die Reduktion der Auflösung des zweiten zell-Typs kann erreicht werden, indem Informationen aus den Zwischengrößen entfernt werden, bevorzugt mittels einer Verwerfungsoperation (engl. (max-/average-) pooling).

Weiterhin wird vorgeschlagen, dass das neuronale Netz zumindest eine Überbrückungsverbindung (engl. skip connection) aufweist, die eine Zwischengröße des Kodierers an den Dekodierer weiterleitet. Der zweite Zell-Typ weist zusätzlich einen dritten Eingangsknoten auf und der zweite Zell-Typ ist ferner eingerichtet, eine Eingangsgröße des dritten Eingangsknoten zu interpolieren, insbesondere mittels einer parametrisierbaren Operation, wie z.B. einer bilinearen Interpolation (engl. bilinear interpolation).

Vorteilhafterweise hat die Auflösung der Ausgangsgröße, die als Eingangsgröße des dritten Eingangsknoten verwendet wird, die gleiche Auflösung wie die Eingangsgröße der Zelle des dritten Zell-Typs.

Weiterhin wird vorgeschlagen, dass eine jede erste Größe abhängig von den weiteren ersten Größe der weiteren Operation der jeweiligen Kante ist, insbesondere mittels einer softmax-Funktion relaxiert wird. Vorzugsweise wird beim Auswählen der Operationen, jeweils die Operationen der Kanten ausgewählt, denen die größte erste Größe zugeordnet ist.

Der Vorteil hierbei ist, dass nun über die relaxierte erste Größe mittels eines Gradientenabstiegsverfahren optimiert werden kann.

Weiterhin wird vorgeschlagen, dass beim Anpassen der ersten Größen und der Parametrisierung, die Differenz mittels eines Gradientenabstiegsverfahrens optimiert wird und die Parametrisierung mittels des Gradientenabstiegsverfahrens optimiert wird. Vorteilhafterweise wird eine Lernrate des Gradientenabstiegsverfahrens zur Optimierung der Parametrisierung mittels einer probabilistischen Optimierung (wie zum Beispiel BOHB) ermittelt. Dann, wenn das neuronale Netz erstellt wurde, kann die Parametrisierung erneut angepasst, insbesondere optimiert werden, sodass die Differenz minimal wird.

Das Gradientenabstiegsverfahren hat den Vorteil, dass dieses skalierbar ist. Der Vorteil von BOHB ist, dass BOHB parallelisiert ausgeführt werden kann.

Weiterhin wird vorgeschlagen, dass eine Mehrzahl von gleichen neuronalen Netzen erstellt werden, die dann hintereinandergeschaltet werden. Daraufhin werden dann die hintereinander geschalteten NN gemeinsam hinsichtlich der Parametrisierung optimiert.

Weiterhin wird vorgeschlagen, dass das neuronale Netz zwei Stereobilder zweier Kameras erhält und das neuronale Netz eingerichtet ist, abhängig von den Stereobildern eine Tiefenschätzung der abgebildeten Objekte der Bilder zu ermitteln. Das neuronale Netz verarbeitet die Stereobilder mittels jeweils eines weiteren Kodierers oder Filters, gefolgt von einer Korrelationsschicht (engl. correlation layer), vor der Verarbeitung mittels des Kodierers und des Dekodierers.

Die Kameras können die gleiche Szene aus unterschiedlichen Perspektiven erfassen.

Vorteilhaft ist, wenn das neuronale Netz ein U-Net oder ein Autoencoder oder ein neuronales Netz ist, das eingerichtete ist, eine semantische Segmentierung oder eine Tiefenschätzung durchzuführen.

In einem weiteren Aspekt der Erfindung wird vorgeschlagen, dass das erstellte neuronale Netz des ersten Aspektes für ein technisches System verwendet wird.

Das technische System umfasst eine Erfassungseinheit (z.B. eine Kamera), welche mit dem neuronalen Netz verbunden ist und dem neuronalen Netz eine erfasste Größe (z.B. ein Kamerabild) als Eingangsgröße bereitstellt. Abhängig von einer ermittelten Ausgangsgröße des neuronalen Netzes wird ein Aktor des technischen Systems angesteuert. Alternativ kann abhängig von der Ausgangsgröße des technischen Systems eine Steuergröße ermittelt werden. Der Aktor kann dann abhängig von der Steuergröße angesteuert werden.

Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein.

In einem weiteren Aspekt wird ein Computerprogramm vorgeschlagen. Das Computerprogramm ist eingerichtet, eines der vorherigen genannten Verfahren auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist. Des Weiteren wird eine Vorrichtung vorgeschlagen, die eingerichtet ist eines der Verfahren des ersten Aspektes auszuführen.

Ausführungsbeispiele der oben genannten Aspekte sind in den beiliegenden Zeichnungen dargestellt und in der nachfolgenden Beschreibung näher erläutert. Dabei zeigen:

**Kurze Beschreibung der Zeichnungen**

Fig. 1 eine schematische Darstellung einer bekannten Zelle für DARTS und einer neu vorgeschlagenen Upsampling-Zelle;

Fig. 2 eine schematische Darstellung eines Flussdiagrammes zum Optimieren einer Architektur und einer Parametrisierung eines neuronalen Netzes mit einem Kodierer und einem Dekodierer;

Fig. 3      eine schematische Darstellung eines zumindest teilautonomen Roboters;

Fig. 4      eine schematische Darstellung einer Vorrichtung zum Optimieren eines neuronalen Netzes.

Ein neuronales Netz mit einem Kodierer und einem Dekodierer ist dadurch gekennzeichnet, dass eine Eingangsgröße, wie zum Beispiel ein Bild, mit einer hohen Auflösung, zum Beispiel 940 x 512 Pixel, beim Propagieren durch das neuronale Netz auf eine Zwischengröße mittels des Kodierers abgebildet wird, deren Auflösung geringer ist als die Auflösung der Eingangsgröße. Die Auflösung dieser Zwischengröße kann bspw. bei dem U-Net 32 x 32 Pixel betragen. Daraufhin wird diese Zwischengröße weiter durch den Dekodierer des neuronalen Netzes propagiert, bis die Ausgangsgröße vorliegt. Die Ausgangsgröße kann die gleiche, eine höhere oder geringere Auflösung wie die Eingangsgröße aufweisen, jedoch ist die Auflösung der Ausgangsgröße größer als die Auflösung der Zwischengröße. Die Auflösung der Ausgangsgröße des U-Nets kann $388 \times 388$ Pixel betragen.

Der Kodierer kann in Form von mehreren nacheinander geschalteten "downsampling" Schichten des neuronalen Netzes aufgebaut sein, die dadurch gekennzeichnet sind, dass diese die Auflösung ihrer Eingangsgröße reduzieren. Die Reduktion der Auflösung der Eingangsgröße kann durch einen "downsampling" Faktor vorgegeben sein. Beispielhaft können die "downsampling" Schichten jeweils mehrere 3x3 Filter aufweisen, deren Zwischengrößen durch eine Aktivierungsfunktion verarbeitet werden und anschließend ein max-pooling mit Stride 2 angewendet wird. Zusätzlich können nach den einzelnen "downsampling" Schichten, Schichten zwischengeschaltet sein, die die Auflösung ihrer Eingangsgröße unverändert lassen, bspw. vollvermaschte Schichten (engl. fully connected layer).

Der Dekodierer kann durch mehrere hintereinandergeschalteten "upsampling" Schichten des neuronalen Netzes aufgebaut sein. Die Anzahl der "upsampling" Schichten kann abhängig von dem "downsampling" Faktor sein. Die "upsampling" Schichten können zuerst ein upsampling ihrer Eingangsgröße durchführen, gefolgt von einer oder mehreren Faltungen mit $2 \times 2$ oder $3 \times 3$ Filtern.

Das neuronale Netz, welches den Kodierer und den Dekodierer umfasst, kann zusätzlich Überbrückungsverbindungen (engl. skip connection) aufweisen, die jeweils eine der "downsampling" Schichten mit einer der "upsampling" Schichten verbindet. Falls die Auflösung der bereitgestellten Eingangsgröße durch die Überbrückungsverbindung nicht mit der Auflösung der Eingangsgröße der "upsampling" Schicht entspricht, kann die bereitgestellte Eingangsgröße durch die Überbrückungsverbindung mittels der bilinearen Interpolation auf die Auflösung der Eingangsgröße der "upsampling" Schicht angepasst werden.

Die neuronalen Netze mit diesem beschriebenen Aufbau, also mit einem Kodierer und Dekodierer, sind mit den aktuellen Architekturoptimierungsmethoden, zum Beispiel aus dem Stand der Technik bekanntem Verfahren DARTS, nicht optimierbar. Dies soll im nachfolgenden kurz erläutert werden.

Eine Architekturoptimierung mit DARTS ist jedoch wünschenswert, da DARTS den Vorteil hat, dass diese Methode ein Gradientenabstiegsverfahren verwendet und damit skalierbar ist. Ferner lässt sich mittels DARTS in einer alternierenden Weise sowohl die Architektur als auch eine Parametrisierung des neuronalen Netzes optimieren. Unter der Parametrisierung können alle Parameter des Netzes verstanden werden, abhängig von welchen das neuronale Netz seine Ausgangsgröße ermittelt, insbesondere bei einer Inferenz. Vorzugsweise umfasst die Parametrisierung des neuronalen Netzes Gewichte des neuronalen Netzes und Filterkoeffizienten der Filter des neuronalen Netzes.

Bei DARTS wird die Architektur des neuronalen Netzes mit einer Mehrzahl von Zellen (engl. cell) dargestellt, die nach einer vorgebbaren Reihenfolge miteinander verbunden sind. Diese verbundenen Zellen beschreiben das sogenannte Suchnetzwerk (engl. search network), über welches optimiert werden soll. Eine Zelle ist ein gerichteter nichtzyklischer Graph der eine Mehrzahl von N unterschiedlichen Knoten aufweist. Die Zelle hat zumindest einen Eingangsknoten, vorzugsweise haben die Zellen zwei oder mehr Eingangsknoten. Die Zellen umfassen ferner mehrere Zwischenknoten und einen Ausgangsknoten. Jeder der Knoten stellt eine Zwischengröße $x(i)$, in anderen Worten eine Aktivierungskarte (engl. activation map), des neuronalen Netzes dar und jede der Kanten $(i,j)$ stellt eine Operation $o^{(i,j)}$, insbesondere eine Transformation, dar, die die Zwischengröße $x(i)$ des Knoten $i$ auf die Zwischengröße $x(j)$ des Knoten $j$ abbildet. Alle Knoten sind mit allen ihren vorhergehenden Knoten verbunden. Der Ausgangsknoten ist ebenfalls mit allen vorherigen Knoten verbunden, wobei die Ausgangsgröße des Ausgangsknotens durch eine Zusammenfassung (engl. concatening) der Zwischengrößen aller vorherigen Knoten ermittelt wird.

Ein Zwischenergebnis $x(j)$ des $j$-ten Konten wird wie folgt ermittelt:

$$x^{(j)} = \sum_{i<j} o^{(i,j)}(x^{(i)}) \qquad (1)$$

wobei $o^{(i,j)} \in 0$ und $0$ ist die Menge aller möglicher Operationen.

Folgende mögliche Operationen sind denkbar: Überbrückungsverbindung (engl. skip connection), $3 \times 3$ average pooling, $3 \times 3$ max pooling, $3 \times 3$ und $5 \times 5$ Faltungen (engl. dilated separable convolutions, z.B. mit Dilation Faktor 2) und eine "Null"-Verbindung (engl. zero operation), die eine nicht vorhandene Verbindung zwischen den Knoten darstellt.

Die Eingangsknoten sind jeweils mit einem Ausgangsknoten einer vorherigen Zelle des Suchnetzwerkes verbunden.

DARTS verwendet zwei unterschiedliche Typen von Zellen. Es gibt eine Normale-Zelle, welche die Auflösung ihrer Eingangsgrößen beibehält und es gibt eine Reduktion-Zelle, die eine Auflösung ihrer Eingangsgrößen reduziert, vorzugsweise um den Faktor zwei.

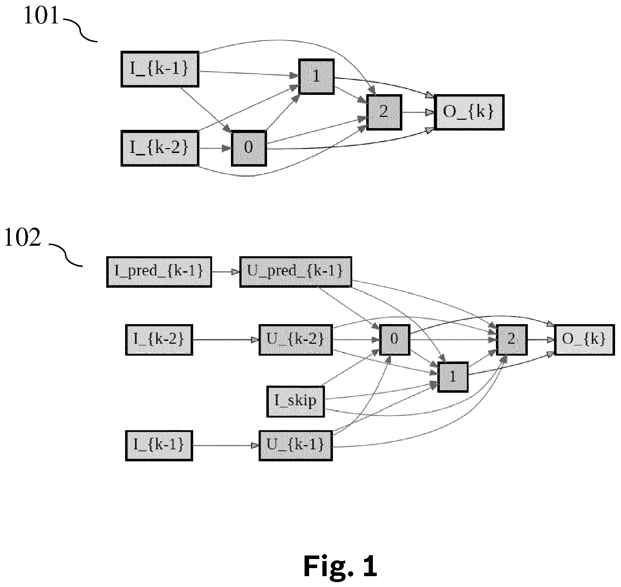

Die Normale-Zelle ist schematisch in Figur 1 oben mit Bezugszeichen (101) dargestellt. Beispielhaft enthält die Normale-Zelle (101) 6 Knoten, wovon 2 Eingangsknoten (I_{k-1}, I_{k-2}), 3 Zwischenknoten (0,1, 2) und ein Ausgangsknoten (O_{k}) vorliegen.

Um über die unterschiedlichen Operationen ($o^{(i,j)}$) optimieren zu können, insbesondere mittels eines Gradiententabstiegsverfahrens, muss die zu optimierende Funktion kontinuierlich sein. Dies wird in DARTS mittels Einführen von Variablen $\alpha^{(i,j)} \in \mathbb{R}$ und einer Relaxation dieser Variablen $\alpha^{(i,j)}$ erreicht. Jeder Operation $o^{(i,j)}$ der Kanten (i,j) wird eine Variable $\alpha^{(i,j)}$ zugeordnet. Die Relaxation der Variablen $\alpha^{(i,j)}$ kann mittels einer Softmax Funktion, die auf alle Variablen der möglichen Operationen 0 der Kante angewendet wird, erreicht werden:

$$S_o^{(i,j)} = \frac{exp\left(\alpha^{(i,j)}\right)}{\sum_{o \in O} exp\left(\alpha^{(i,j)}\right)} \qquad (2)$$

Dies führt zur folgender Gleichung:

$$\bar{o}^{(i,j)} = \sum_{o \in O} S_o^{(i,j)} o(x^{(i)}) \qquad (3)$$

Gleichung (1) kann mit Gleichung (3) nun umgeschrieben werden:

$$x^{(j)} = \sum_{i < j} \bar{o}^{(i,j)}(x^{(i)}) \qquad (4)$$

Die Optimierung der Architektur kann nun mittels eines Gradiententabstiegsverfahrens über die Variable $\alpha$ und über die Parametrisierung w des neuronalen Netzes abwechselnd durchgeführt werden.

Mittels des oben beschriebenen Verfahrens DARTS, können nur neuronale Netze mit einem Kodierer optimiert werden. Denn mit den zwei unterschiedlichen Zell-Typen gemäß DARTS, kann eine Architektur eines neuronalen Netzes bestehend aus einem Kodierer und einem Dekodierer nicht optimiert werden, da für den Dekodierer kein geeigneter Zell-Typ zur Verfügung steht.

Daher wird im Folgenden ein neuer Zell-Typ vorgeschlagen, um auch Architekturen neuronaler Netze mit einem Kodierer und Dekodierer optimieren zu können

Hierfür wird eine sogenannte Upsampling-Zelle vorgeschlagen. Die Upsampling-Zelle ist in Figur 1 mit Bezugszeichen (102) schematisch dargestellt. Die Upsampling-Zelle (102) unterscheidet sich zu den anderen Zelltypen (101) darin, dass diese Upsampling-Zelle (102) zusätzlich zu dem Eingangsknoten (I_{k-2},I_{k-1}) in diesem Ausführungsbeispiel zwei weitere Eingangsknoten (I_skip,I_pred_{k-1}) aufweist und jeder der Eingangsknoten mit einem Upsampling-Knoten verbunden ist, der die Eingangsgröße interpoliert, insbesondere um einen Faktor 2 die Auflösung der jeweiligen Eingangsgröße interpoliert.

In einem weiteren Ausführungsbeispiel hat die Upsampling-Zelle (102) nur einen Eingangsknoten (I_{k-1}) und nur einen weiteren Eingangsknoten (I_pred_{k-1}).

In dem Suchnetzwerk sind die zwei Eingangsknoten (I_{k-2},I_{k-1}) ebenfalls jeweils mit einem Ausgangsknoten einer vorherigen Zelle verbunden.

Der weitere Eingangsknoten (I_pred_{k-1}) ist im Suchnetzwerk mit einem Ausgangsknoten einer vorhergehenden Upsampling-Zelle verbunden. Der weitere Eingangsknoten (I_skip) ist mit einer vorhergehenden Normalen-Zelle oder einer vorhergehenden Reduktion-Zelle verbunden.

Das Interpolieren der Eingangsgrößen der Upsampling-Zelle kann mittels einer transponierten Faltung (engl. transposed convolution) durchgeführt werden. Vorzugsweise wird das Interpolieren der Eingangsgröße des Eingangsknotens (I_skip) durch eine lineare Interpolation durchgeführt.

Die Zwischenknoten der Upsampling-Zelle werden wie oben beschrieben für die anderen Zell-Typen gehandhabt, insbesondere werden die gleichen möglichen Operationen 0 verwendet.

Der Ausgangsknoten der Upsampling-Zelle ist ebenfalls mit allen vorhergehenden Knoten dieser Zelle verbunden. Vorzugsweise werden die Ergebnisse aller vorherigen Knoten zusammengefügt und anschließend optional mittels einer Faltung verarbeitet und daraufhin als Ausgangsgröße ausgegeben.

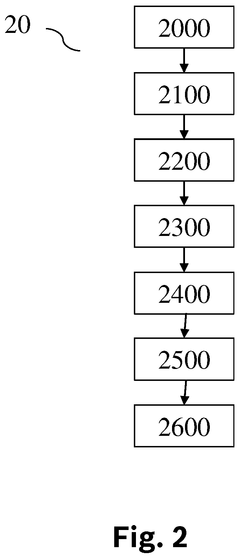

Figur 2 zeigt ein schematisches Flussdiagramm zum Optimieren einer Architektur und einer Parametrisierung eines neuronalen Netzes mit einem Kodierer und einem Dekodierer.

Das Verfahren (20) beginnt mit Schritt 2000. In diesem Schritt wird eine Architektur des Netzes vorgegeben. Die Architektur kann beispielsweise durch die Auflösung der Eingangs- und Ausgangs-größe des neuronalen Netzes, eine Anzahl der Eingangsgrößen vorgegeben sein. Ebenso kann die Architektur des neuronalen Netzes durch die geringste Auflösung der Zwischengrößen des neuronalen Netzes oder einer Anzahl der Schichten des neuronalen Netzes, usw. vorgegeben sein.

In einer Ausführungsform des Verfahrens (20) ist die Architektur des neuronalen Netzes gegeben durch einen Kodierer mit 6 (Faltungs-)Schichten, die jeweils die Auflösung ihrer Eingangsgröße halbieren und die Anzahl der Filter dieser Schichten sich, verglichen zu der Anzahl der Filter ihrer unmittelbar vorhergehenden Schicht, verdoppelt. Der Dekodierer des neuronalen Netzes ist in diesem Ausführungsbeispiel durch drei (Faltungs-)Schichten gegeben, die die Auflösung ihre Eingangsgröße jeweils verdoppeln.

Für Tiefenschätzungen mit dem tiefen neuronalen Netz kann ein Siamese Netzwerk die Eingangsgröße des neuronalen Netzes verarbeiten und einer Korrelationsschicht weiterreichen, die dann beispielsweise ihre Zwischengröße an den Kodierer bereitstellt.

Ebenso können in Schritt 2000 Eigenschaften der Zell-Typen definiert werden, beispielsweise, dass jeder Zell-Typ nur 3 Zwischenknoten hat. Ebenso kann in Schritt 2000 die Menge aller möglichen Operation einer jeden Kante festgelegt werden.

Daraufhin wird abhängig von der vorgegebenen Architektur und den definierten Zellen, ein Suchnetzwerk (eng. search network) erstellt. Dafür wird eine Mehrzahl der 3 unterschiedlichen Zell-Typen, Normale-Zellen, Reduktion-Zellen und Upsampling-Zellen, hintereinander angeordnet, sodass die vorgebbare Architektur erreicht wird. D.h. nach Beendigung des Schrittes 2000 liegt das Suchnetzwerk umfassend die unterschiedlichen hintereinander angeordneten Zellen vor, die daraufhin im nachfolgenden Schritt optimiert werden sollen.

In der Ausführungsform des Verfahrens, in welcher das neuronale Netz mit Kodierer, der 6 Schichten enthält und dem Dekodierer, der 3 Schichten enthält, kann das Suchnetzwerk wie folgt erstellt werden: Der Kodierer des Suchnetzwerkes wird durch eine Anordnung abwechselnd von Normalen-Zellen und Reduktion-Zellen erstellt, z.B. jeweils 6 Zellen von den beiden Typen. Der Dekodierer des Suchnetzwerkes umfasst in dieser Ausführungsform 3 Zellen des Typs der Upsampling-Zelle. Es sei angemerkt, dass die Reduktion/Erhöhung der Auflösungen der Schichten mit der Reduktion/Erhöhung der Auflösungen der Reduktions-Zellen und Upsampling-Zellen übereinstimmt.

In dem nachfolgenden Schritt 2100 werden Trainingsdaten umfassend Trainingseingangsgrößen und jeweils zugeordneten Trainingsausgangsgrößen bereitgestellt. Die Trainingsdaten werden in zwei Mengen aufgeteilt, vorzugsweise umfassen diese Mengen jeweils eine gleiche Anzahl von Trainingseingangsgrößen und jeweils zugeordneten Trainingsausgangsgrößen.

Nachdem Schritt 2100 beendet wurde, folgt der optionale Schritt 2200. In diesem Schritt kann die Parametrisierung w des Suchnetzwerkes vorab auf den Trainingsdaten oder einer der zwei Mengen der Trainingsdaten optimiert werden. Hierfür werden die Trainingseingangsdaten durch das Suchnetzwerk propagiert. Anschließend wird abhängig von den ermittelten Ausgangsgrößen des Suchnetzwerkes und den jeweiligen Trainingsausgangsgrößen eine Kostenfunktion (engl. loss function) ermittelt, die abhängig von der Parametrisierung w und der Variablen $\alpha$ ist. Mittels eines Gradientenabstiegsverfahrens, bspw. Stochastic Gradient Descent (SGD), über die Parametrisierung w kann dann die Kostenfunktion optimiert, insbesondere minimiert oder maximiert, werden. Es sei angemerkt, dass die Parametrisierung w nicht vollständig optimiert werden muss. Es ist ausreichend wenn diese nur über eine Mehrzahl von Iterationen optimiert werden, ohne dass eine Konvergenz eintritt.

Nachdem der optionale Schritt 2200 oder der Schritt 2100 beendet wurde, folgt Schritt 2300. Hierin wird das Suchnetzwerk gemäß dem DARTS Optimierungsalgorithmus optimiert. D.h. es wird abwechselnd über die Variable $\alpha$ und über die Parametrisierung w mittels eines Gradientenabstiegsverfahren optimiert.

Die Optimierung der Variable $\alpha$ wird auf einer der zwei Mengen der Trainingsdaten aus Schritt 2100 durchgeführt. Nachdem diese Optimierung abgeschlossen wurde, wird die Optimierung der Parametrisierung w auf der zweiten Menge der Trainingsdaten ausgeführt. Diese abwechselnde Optimierung der Variable $\alpha$ und der Parameterisierung wird mehrfach ausgeführt, insbesondere bis ein vorgebbares Abbruchkriterium erfüllt ist.

Eine Lernrate des Gradientenabstiegsverfahrens kann beispielsweise mittels BOHB separat optimiert werden, um bessere Konvergenzeigenschaften zu erhalten. Optimieren von Parameter mit BOHB, siehe hierzu das eingangs genannte Dokument "BOHB: Robust and efficient hyperparameter optimization at scale".

Im nachfolgenden Schritt 2400 wird abhängig von der Variable $\alpha$ eine optimale Architektur, insbesondere optimalen Operationen, des vorgegebenen neuronalen Netzes aus Schritt 2000 ermittelt. Gemäß dem DARTS Verfahren, wird hierfür die Relaxation der Variablen $\alpha$ rückgängig ausgeführt. Dies kann beispielsweise durchgeführt werden, in dem die stärkste Operation abhängig von der Variable $\alpha$ für jede Kante ausgewählt wird:

$$\max_{o \in O, o \neq zero} S_o^{(i,j)} \qquad (5)$$

Nachdem in Schritt 2400 die optimalen Operationen ermittelt wurden, wird in Schritt 2500 ein neuronales Netz gemäß dieser ausgewählten Operationen und der vorgegebenen Architektur aus Schritt 2000 initialisiert. Ferner wird die Parametrisierung w, die in Schritt 2300 optimiert wurde, ebenso für die Initialisierung des neuronalen Netzes verwendet.

Denkbar ist auch, dass das initialisierte neuronale Netz mehrfach hintereinandergeschaltet wird, vergleichbar mit einem AutoDispNet-CSS.

Anschließend wird in Schritt 2500 die Parametrisierung w des initialisierten neuronalen Netzes auf den bereitgestellten Trainingsdaten wiederholt optimiert. Hierfür werden die Trainingseingangsgrößen durch das initialisierte neuronale Netz propagiert und abhängig von den ermittelten Ausgangsgrößen und den Trainingsausgangsgrößen die Parametrisierung angepasst, insbesondere angelehnt an Schritt 2100.

In dem nachfolgenden, optionalen Schritt 2600 wird das initialisierte neuronale Netz aus Schritt 2500 für einen Roboter verwendet. Beispielsweise kann das neuronale Netz aus Schritt 2500 verwendet werden, um abhängig von einer bereitgestellten Eingangsgröße eine Ausgangsgröße zu ermitteln, wobei daraufhin abhängig von der Ausgangsgröße mittels einer Steuerungseinheit der Roboter gesteuert wird.

Damit endet das Verfahren (20).

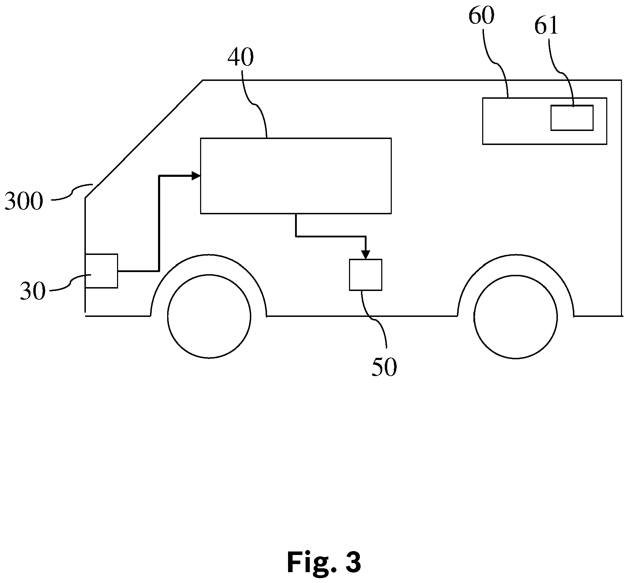

Figur 3 zeigt eine schematische Darstellung eines zumindest teilautonomen Roboters, welcher in einem ersten Ausführungsbeispiel durch ein zumindest teilautonomes Fahrzeug (300) gegeben ist. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

Das zumindest teilautonome Fahrzeug (300) kann eine Erfassungseinheit (30) umfassen. Die Erfassungseinheit (30) kann zum Beispiel eine Kamera sein, welche eine Umgebung des Fahrzeugs (300) erfasst. Die Erfassungseinheit (30) kann mit dem neuronalen Netz (40), erhalten nach Schritt 2600, verbunden sein. Das neuronale Netz (40) ermittelt abhängig von einer bereitgestellten Eingangsgröße, z.B. bereitgestellt von der Erfassungseinheit (30), und in Abhängigkeit einer Mehrzahl von Parametern des neuronalen Netzes (40) eine Ausgangsgröße. Die Ausgangsgröße kann an eine Steuerungseinheit (50) weitergeleitet werden.

Die Steuerungseinheit (50) steuert in Abhängigkeit der Ausgangsgröße des neuronalen Netzes (40) einen Aktor, vorzugsweise steuert diesen den Aktor derart, dass das Fahrzeug (300) ein kollisionsfreies Manöver ausführt. Im ersten Ausführungsbeispiel kann der Aktor ein Motor oder ein Bremssystem des Fahrzeugs (300) sein. In einem weiteren Ausführungsbeispiel kann der teilautonome Roboter ein Werkzeug, eine Werkmaschine oder ein Fertigungsroboter sein. Ein Material eines Werkstückes kann mittels des neuronalen Netzes (40) klassifiziert werden. Der Aktor kann hierbei z.B. ein Motor, der einen Schleifkopf betreibt, sein.

Ferner umfasst das Fahrzeug (300), insbesondere der teilautonome Roboter, eine Recheneinheit (60) und ein maschinenlesbares Speicherelement (60). Auf dem Speicherelement (60) kann ein Computerprogramm gespeichert sein, welches Befehle umfasst, die beim Ausführen der Befehle auf der Recheneinheit (60) dazu führen, dass die Recheneinheit (60) das Verfahren mit all seinen Schritten, oder nur Schritt 2600, gemäß Figur 2, ausführt. Alternativ kann auf dem Speicherelement (60) das neuronale Netz (40) hinterlegt sein und die Recheneinheit führt die Berechnungen des neuronalen Netzes (40) aus.

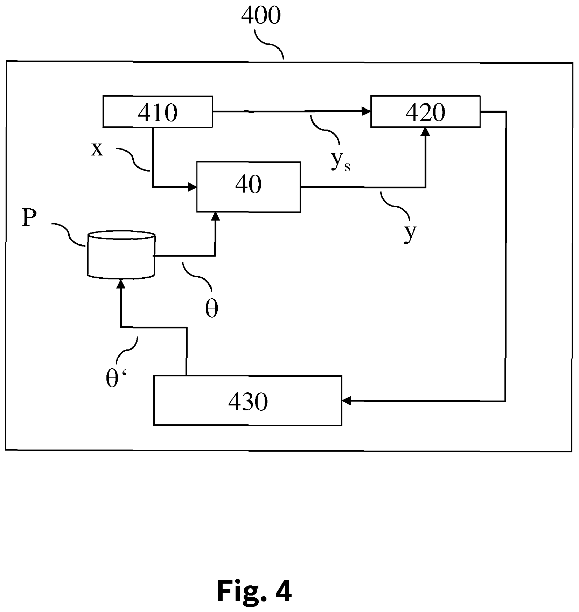

Figur 4 zeigt eine schematische Darstellung einer Vorrichtung (400) zum Optimieren, insbesondere Anlernen, des neuronalen Netzes (40), insbesondere zum Ausführen der Schritte zum Optimieren des neuronalen Netzes (40). Die Vorrichtung (400) umfasst ein Trainingsdatenmodul (410) und ein Differenzmodul (420). Das Differenzmodul (420) ermittelt abhängig von der Trainingsausgangsgrößen $y_s$ und den ermittelten Ausgangsgrößen y des neurnalen Netzes (40) eine Differenz, insbesondere mittels der Kostenfunktion. Das Trainingsdatenmodul (410) enthält die Trainingsdaten. Zweckgemäß umfassen die Trainingsdaten eine Mehrzahl von Trainingseingangsgrößen, die jeweils gelabelt sind. Während des Optimierens, ermittelt das Optimierungsmodul (430) abhängig von der ermittelten Differenz des Differenzmoduls (420) eine Änderung $\theta'$ der Parameterisierung w oder Variable $\alpha$. Abhängig von der Änderung $\theta'$ wird dann in einem Speicher P, in welchem die Parameterisierung w und die Variablen $\alpha$ hinterlegt sind, angepasst.

## Patentansprüche

1. Computerimplementiertes Verfahren zum, insbesondere automatisieren, Erstellen eines neuronalen Netzes (40), welches einen Kodierer, der mit einem Dekodierer verbunden ist, umfasst, wobei das erstellte neuronale Netz (40) für ein technisches System verwendet wird, wobei das technische System umfasst eine Kamera, welche mit dem neuronalen Netz verbunden ist und dem neuronalen Netz ein Kamerabild als Eingangsgröße bereitstellt, wobei das Verfahren folgende Schritte aufweist:

- Bereitstellen jeweils einer Auflösung von Eingangsgrößen und Ausgangsgrößen des Kodierers und des Dekodierers;
- Bereitstellen unterschiedlicher Zell-Typen,

wobei jeder Zell-Typ eine Mehrzahl von Konten umfasst, die nach einer vorgebbaren Reihenfolge beginnend bei zumindest einem Eingangsknoten und endend bei einem Ausgangsknoten verbunden sind,

wobei jeder Knoten mit all seinen vorhergehenden Knoten mittels gerichteten Kanten verbunden ist,

wobei jeder Kante eine Mehrzahl von parametrisierbaren Operationen ($O$) zugeordnet ist und allen Operationen jeweils eine erste Größe ($\alpha$) zugeordnet ist,

wobei die Kanten eingerichtet sind, eine Zwischengröße des vorhergehenden Knotens jeweils mittels jeder der ihr zugeordneten Operationen zu verarbeiten und in Abhängigkeit der der jeweiligen Operation zugeordneten ersten Größe

($\alpha$) gewichtet aufzusummieren und an den nachfolgenden verbundenen Knoten als dessen Zwischengröße bereitzustellen,

wobei ein erster Zell-Typ (engl. reduction cell) eingerichtet ist, die Auflösung seiner Ausgangsgröße relativ zu der Auflösung seiner Eingangsgröße zu reduzieren,

wobei ein zweiter Zell-Typ (engl. upsampling cell) eingerichtet ist, die Auflösung seiner Ausgangsgröße relativ zu der Auflösung seiner Eingangsgröße zu erhöhen;

- Aneinanderreihen einer Mehrzahl von Zellen der unterschiedlichen Zell-Typen, sodass die bereitgestellten Auflösungen des Kodierers und Dekodierers erzielt werden,

wobei die Eingangsknoten der Zellen jeweils mit dem Ausgangsknoten der unmittelbar vorhergehenden Zellen verbunden sind;

- Bereitstellen von Trainingsdaten, die Trainingseingangsgrößen in Form von Kamerabildern und jeweils den Trainingseingangsgrößen zugeordneten Trainingsausgangsgrößen zur Ansteuerung eines Aktors des technischen Systems umfassen;

- Alternierendes Anpassen der ersten Größen ($\alpha$) und einer Parametrisierung (w) der parametrisierbaren Operationen (o),

wobei das Anpassen derart erfolgt, dass eine Differenz zwischen Ausgangsgrößen, die mittels eines Propagierens der Trainingseingangsgrößen entlang der aneinandergereihten Zellen ermittelt werden, und den Trainingsausgangsgrößen optimiert wird;

- Auswählen jeweils einer der Operationen der Kanten abhängig von den angepassten ersten Größen ($\alpha$);

- Erstellen des neuronalen Netzes (40) in Abhängigkeit der aneinandergereihten Zellen und der ausgewählten Operationen,

wobei abhängig von einer ermittelten Ausgangsgröße des neuronalen Netzes ein Aktor des technischen Systems angesteuert wird.

2. Verfahren nach Anspruch 1, wobei der zweite Zell-Typ ferner eingerichtet ist, die Eingangsgröße des Eingangsknoten zu interpolieren, insbesondere mittels einer parametrisierbaren Operation.

3. Verfahren nach einem der Ansprüche 1 oder 2, wobei der zweite Zell-Typ zusätzlich einen zweiten Eingangsknoten (I_pred_k-1) aufweist,

wobei der zweite Zell-Typ ferner eingerichtet ist, die Eingangsgröße des zweiten Eingangsknoten (I_pred_k-1) zu interpolieren, insbesondere mittels der parametrisierbaren Operation, und

wobei beim Aneinanderreihen einer Mehrzahl von Zellen die zweiten Eingangsknoten (I_pred_k-1) der Zellen des zweiten Zell-Typs mit einem Ausgang einer vorhergehenden Zelle des zweiten Zell-Typs verbunden sind.

4. Verfahren nach einem der vorhergehenden Ansprüche, wobei das neuronale Netz (40) zumindest eine Überbrückungsverbindung (engl. skip connection) aufweist, die eine Zwischengröße des Kodierers an den Dekodierer weiterleitet, wobei der zweite Zell-Typ zusätzlich einen dritten Eingangsknoten (I_skip) aufweist, und der zweite Zell-Typ ferner eingerichtet ist, eine Eingangsgröße des dritten Eingangsknoten (I_skip) zu interpolieren, insbesondere mittels einer parametrisierbaren Operation, und

wobei beim Aneinanderreihen der Mehrzahl der Zellen der dritte Eingangsknoten (I_skip) mit dem Ausgangsknoten einer der Zellen des ersten Typs verbunden ist.

**5.** Verfahren nach einem der vorhergehenden Ansprüche, wobei ein dritter Zell-Typ eingerichtet ist, seine Eingangsgröße derart zu verarbeiten, dass die Auflösung seiner Eingangsgröße der Auflösung seiner Ausgangsgröße entspricht,
wobei beim Aneinanderreihen der Mehrzahl der Zellen, zumindest zwischen einer der Zellen des ersten oder zweiten Zell-Typs eine Zelle des dritten Typs eingefügt ist.

**6.** Verfahren nach einem der vorhergehenden Ansprüche, wobei die Trainingsdaten in eine erste Menge von Trainingsdaten (D_train) und in eine zweite Menge von Trainingsdaten (D_val) aufgeteilt wird,
wobei die Parametrisierung (w) über die erste Menge der Trainingsdaten (D_train) optimiert wird, und die erste Größen ($\alpha$) über die zweite Menge der Trainingsdaten (D_val) optimiert wird.

**7.** Verfahren nach einem der vorhergehenden Ansprüche, wobei eine jede erste Größe ($\alpha$) abhängig von den weiteren ersten Größe ($\alpha$) der weiteren Operation der jeweiligen Kante ist, insbesondere mittels einer softmax-Funktion relaxiert wird,
wobei beim Auswählen der Operationen, jeweils die Operationen der Kanten ausgewählt werden, denen die größte erste Größe ($\alpha$) zugeordnet ist.

**8.** Verfahren nach Anspruch 7, wobei beim Anpassen der ersten Größen ($\alpha$) und der Parametrisierung (w), die Differenz mittels eines Gradientenabstiegsverfahrens optimiert wird und die Parametrisierung mittels des Gradientenabstiegsverfahrens optimiert wird.
wobei eine Lernrate des Gradientenabstiegsverfahrens zur Optimierung der Parametrisierung (w) mittels einer probabilistischen Optimierung ermittelt wird. wobei dann, wenn das neuronale Netz erstellt wurde, die Parametrisierung (w) erneut angepasst wird.

**9.** Verfahren nach einem der vorherigen Ansprüche, wobei für den ersten Zell-Typ ein erster Faktor vorgegeben ist, der charakterisiert, um wie viel die Auflösung seiner Ausgangsgröße reduziert wird, und
wobei für den zweiten Zell-Typ ein zweiter Faktor vorgegeben ist, der charakterisiert, um wie viel die Auflösung seiner Ausgangsgröße erhöht wird.

**10.** Verfahren nach einem der vorherigen Ansprüche, wobei das neuronale Netz (40) zwei Stereobilder zweier Kameras erhält und das neuronale Netz ein Siamese Netzwerk ist und eingerichtet ist, abhängig von den Stereobildern eine Tiefenschätzung der abgebildeten Objekte der Bilder zu ermitteln,
wobei das neuronale Netz (40) die Stereobilder mittels eines weiteren Kodierers, gefolgt von einer Korrelationsschicht (engl. correlation layer) verarbeitet werden, und erst dann mittels des gemäß dem Verfahren nach einem der vorhergehenden Ansprüche erstellten Kodierers und des Dekodierers verarbeitet werden.

**11.** Computerprogramm, welches Befehle umfasst, die eingerichtet sind, beim Ausführen dieser Befehle, einen Computer zu veranlassen, das Verfahren nach einem der vorhergehenden Ansprüche auszuführen.

**12.** Maschinenlesbares Speicherelement (61), auf welchem das Computerprogramm nach Anspruch 11 hinterlegt ist.

**13.** Vorrichtung (60), welche eingerichtet ist, das Verfahren nach einem der vorhergehenden Ansprüche 1 bis 10 auszuführen.

**Claims**

**1.** Computer-implemented method for, in particular automated, creating of a neural network (40) comprising an encoder connected to a decoder, wherein the created neural network (40) is used for a technical system, wherein the technical system comprises a camera connected to the neural network, said camera providing the neural network with a camera image as input variable, wherein the method has the following steps:

- providing in each case a resolution of input variables and output variables of the encoder and of the decoder;
- providing different cell types,
wherein each cell type comprises a plurality of nodes connected according to a predefinable order beginning at at least one input node and ending at an output node,
wherein each node is connected to all its preceding nodes by means of directed edges,
wherein each edge is assigned a plurality of parameterizable operations (O) and all operations are respectively assigned a first variable ($\alpha$),
wherein the edges are configured to process an intermediate variable of the preceding node in each case by means of each of the operations assigned to it and to form a weighted sum thereof depending on the first variable ($\alpha$) assigned to the respective operation and to provide it to the subsequent connected node as the intermediate variable thereof, wherein a first cell type (referred to as reduction cell) is configured to reduce the resolution of its output variable relative to the resolution of its input variable,
wherein a second cell type (referred to as upsampling cell) is configured to increase the resolution of its output variable relative to the resolution of its input variable;

- concatenating a plurality of cells of the different cell types so that the provided resolutions of the encoder and decoder are attained,

wherein the input nodes of the cells are respectively connected to the output node of the directly preceding cells;

- providing training data comprising training input variables in the form of camera images and training output variables respectively assigned to the training input variables for controlling an actuator of the technical system;
- alternately adapting the first variables ($\alpha$) and a parameterization ($w$) of the parameterizable operations ($O$),

wherein the adapting is effected in such a way that a difference between output variables determined by means of propagation of the training input variables along the concatenated cells and the training output variables is optimized;

- selecting in each case one of the operations of the edges depending on the adapted first variables ($\alpha$);
- creating the neural network (40) depending on the concatenated cells and the selected operations,

wherein an actuator of the technical system is controlled depending on a determined output variable of the neural network.

2. Method according to Claim 1, wherein the second cell type is furthermore configured to interpolate the input variable of the input node, in particular by means of a parameterizable operation.

3. Method according to either of Claims 1 and 2, wherein the second cell type additionally has a second input node (I_pred_k-1),
wherein the second cell type is furthermore configured to interpolate the input variable of the second input node (I_pred_k-1), in particular by means of the parameterizable operation, and wherein during the process of concatenating a plurality of cells, the second input nodes (I_pred_k-1) of the cells of the second cell type are connected to an output of a preceding cell of the second cell type.

4. Method according to any of the preceding claims, wherein the neural network (40) has at least one skip connection, which forwards an intermediate variable of the encoder to the decoder,

wherein the second cell type additionally has a third input node (I_skip), and the second cell type is furthermore configured to interpolate an input variable of the third input node (I_skip), in particular by means of a parameterizable operation, and
wherein during the process of concatenating the plurality of cells, the third input node (I_skip) is connected to the output node of one of the cells of the first type.

5. Method according to any of the preceding claims, wherein a third cell type is configured to process its input variable in such a way that the resolution of its input variable corresponds to the resolution of its output variable,
wherein during the process of concatenating the plurality of cells, a cell of the third type is inserted at least between one of the cells of the first or second cell type.

6. Method according to any of the preceding claims, wherein the training data are divided into a first set of training data (D_train) and into a second set of training data (D_val),
wherein the parameterization (w) is optimized by way of the first set of training data (D_train), and the first variables ($\alpha$) are optimized by way of the second set of training data (D_val).

**7.** Method according to any of the preceding claims, wherein each first variable ($\alpha$) is dependent on the further first variable ($\alpha$) of the further operation of the respective edge, in particular is relaxed by means of a softmax function, wherein during the process of selecting the operations, the operations of the edges to which the largest first variable ($\alpha$) is assigned are selected in each case.

**8.** Method according to Claim 7, wherein during the process of adapting the first variables ($\alpha$) and the parameterization ($w$), the difference is optimized by means of a gradient descent method and the parameterization is optimized by means of the gradient descent method, wherein a learning rate of the gradient descent method for optimising the parameterization ($w$) is determined by means of a probabilistic optimization, wherein when the neural network has been created, the parameterization ($w$) is adapted anew.

**9.** Method according to any of the preceding claims, wherein a first factor is predefined for the first cell type, which first factor characterizes by how much the resolution of its output variable is reduced, and wherein a second factor is predefined for the second cell type, which second factor characterizes by how much the resolution of its output variable is increased.

**10.** Method according to any of the preceding claims, wherein the neural network (40) acquires two stereo images from two cameras and the neural network is a Siamese network and is configured to determine a depth estimation of the imaged objects of the images depending on the stereo images, wherein the neural network (40) processes the stereo images by means of a further encoder, followed by a correlation layer, and only then are they processed by means of the encoder and the decoder created in accordance with the method according to any of the preceding claims.

**11.** Computer program comprising instructions which are configured, when these instructions are executed, to cause a computer to carry out the method according to any of the preceding claims.

**12.** Machine-readable storage element (61) on which the computer program according to Claim 11 is stored.

**13.** Device (60) configured to carry out the method according to any of the preceding Claims 1 to 10.

**Revendications**

**1.** Procédé mis en œuvre par ordinateur pour créer, en particulier de manière automatisée, un réseau neuronal (40) comprenant un codeur qui est relié à un décodeur, le réseau neuronal (40) créé étant utilisé pour un système technique, le système technique comportant une caméra qui est reliée au réseau neuronal et qui fournit une image de caméra au réseau neuronal en tant que grandeur d'entrée, le procédé comprenant les étapes suivantes :

- la fourniture respective d'une résolution de grandeurs d'entrée et de grandeurs de sortie du codeur et du décodeur ;
- la fourniture de différents types de cellules,
chaque type de cellule comprenant une pluralité de noeuds qui sont connectés selon une séquence prédéfinissable commençant par au moins un noeud d'entrée et se terminant par un noeud de sortie,
chaque noeud étant relié à tous ses noeuds précédents au moyen d'arêtes orientées,
une pluralité d'opérations paramétrables ($o$) étant associées à chaque arête et une première grandeur ($\alpha$) étant respectivement associée à toutes les opérations,
les arêtes étant conçues pour traiter une grandeur intermédiaire du noeud précédent respectivement au moyen de chacune des opérations qui lui sont associées et pour l'additionner de manière pondérée en fonction de la première grandeur ($\alpha$) associée à l'opération respective et pour la fournir au noeud connecté suivant en tant que grandeur intermédiaire de celui-ci,
un premier type de cellule (angl. reduction cell) étant conçu pour réduire la résolution de sa grandeur de sortie par rapport à la résolution de sa grandeur d'entrée,
un deuxième type de cellule (angl. upsampling cell) étant conçu pour augmenter la résolution de sa grandeur de sortie par rapport à la résolution de sa grandeur d'entrée ;

- la juxtaposition d'une pluralité de cellules des différents types de cellules de manière à obtenir les résolutions fournies par le codeur et le décodeur,

les noeuds d'entrée des cellules étant respectivement reliés au noeud de sortie des cellules immédiatement précédentes ;

- la fourniture de données d'apprentissage qui comprennent des grandeurs d'entrée d'apprentissage sous forme d'images de caméra et des grandeurs de sortie d'apprentissage respectivement associées aux grandeurs d'entrée d'apprentissage pour commander un actionneur du système technique ;
- l'ajustement alterné des premières grandeurs ($\alpha$) et d'une paramétrisation ($w$) des opérations paramétrables ($o$),

l'ajustement étant effectué de manière à optimiser une différence entre des grandeurs de sortie, qui sont déterminées au moyen d'une propagation des grandeurs d'entrée d'apprentissage le long des cellules juxtaposées, et les grandeurs de sortie d'apprentissage ;

- la sélection respective de l'une des opérations des arêtes en fonction des premières grandeurs ajustées ($\alpha$) ;
- la création du réseau neuronal (40) en fonction des cellules juxtaposées et des opérations sélectionnées, un actionneur du système technique étant commandé en fonction d'une grandeur de sortie déterminée du réseau neuronal.

**2.** Procédé selon la revendication 1, dans lequel le deuxième type de cellule est en outre conçu pour interpoler la grandeur d'entrée du noeud d'entrée, en particulier au moyen d'une opération paramétrable.

**3.** Procédé selon l'une des revendications 1 ou 2, dans lequel le deuxième type de cellule comporte en outre un deuxième noeud d'entrée (l_pred_k-1),

le deuxième type de cellule étant en outre conçu pour interpoler la grandeur d'entrée du deuxième noeud d'entrée (l_pred_k-1), en particulier au moyen de l'opération paramétrable et,
les deuxièmes noeuds d'entrée (l_pred_k-1) des cellules du deuxième type de cellule étant reliés à une sortie d'une cellule précédente du deuxième type de cellule lors de la juxtaposition d'une pluralité de cellules.

**4.** Procédé selon l'une des revendications précédentes, dans lequel le réseau neuronal (40) comprend au moins une connexion de pontage (angl. skip connection) qui transmet une grandeur intermédiaire du codeur au décodeur,

le deuxième type de cellule comportant en outre un troisième noeud d'entrée (l_skip), et le deuxième type de cellule étant en outre conçu pour interpoler une grandeur d'entrée du troisième noeud d'entrée (l_skip), en particulier au moyen d'une opération paramétrable et,
le troisième noeud d'entrée (l_skip) étant relié au noeud de sortie de l'une des cellules du premier type lors de la juxtaposition de la pluralité de cellules.

**5.** Procédé selon l'une des revendications précédentes, dans lequel un troisième type de cellule est conçu pour traiter sa grandeur d'entrée de manière à ce que la résolution de sa grandeur d'entrée corresponde à la résolution de sa grandeur de sortie,
une cellule du troisième type étant insérée au moins entre l'une des cellules du premier ou du deuxième type de cellule lors de la juxtaposition de la pluralité de cellules.

**6.** Procédé selon l'une des revendications précédentes, dans lequel les données d'apprentissage sont réparties en un premier ensemble de données d'apprentissage (D_train) et en un deuxième ensemble de données d'apprentissage (D_val),
la paramétrisation ($w$) étant optimisée sur le premier ensemble de données d'apprentissage (D_train), et les premières grandeurs ($\alpha$) étant optimisées sur le deuxième ensemble de données d'apprentissage (D_val).

**7.** Procédé selon l'une des revendications précédentes, dans lequel chaque première grandeur ($\alpha$) dépend de l'autre première grandeur ($\alpha$) de l'autre opération de l'arête respective, et est en particulier relaxée au moyen d'une fonction softmax,
les opérations des arêtes auxquelles est associée la première grandeur ($\alpha$) la plus grande étant respectivement sélectionnée lors de la sélection des opérations.

**8.** Procédé selon la revendication 7, dans lequel, lors de l'ajustement des premières grandeurs ($\alpha$) et de la paramé-

trisation (*w*), la différence est optimisée au moyen d'un procédé de descente de gradient et la paramétrisation est optimisée au moyen du procédé de descente de gradient,

un taux d'apprentissage du procédé de descente de gradient pour l'optimisation de la paramétrisation (iv) étant déterminé au moyen d'une optimisation probabiliste, le paramétrage (*w*) étant à nouveau ajusté lorsque le réseau neuronal est créé.

9. Procédé selon l'une des revendications précédentes, dans lequel, pour le premier type de cellule, un premier facteur est prédéfini, lequel caractérise le degré de réduction de la résolution de sa grandeur de sortie, et dans lequel un deuxième facteur est prédéfini pour le deuxième type de cellule, lequel caractérise le degré d'augmentation de la résolution de sa grandeur de sortie.

10. Procédé selon l'une des revendications précédentes, dans lequel le réseau neuronal (40) reçoit deux images stéréoscopiques de deux caméras et le réseau neuronal est un réseau siamois et est conçu pour déterminer, en fonction des images stéréoscopiques, une estimation de profondeur des objets représentés dans les images,

le réseau neuronal (40) traitant les images stéréoscopiques au moyen d'un autre codeur, suivi d'une couche de corrélation (angl. corrélation layer), et ce n'est qu'ensuite qu'elles sont traitées au moyen du codeur et du décodeur créés conformément au procédé selon l'une des revendications précédentes.

11. Programme informatique qui comprenant des instructions qui sont conçues pour amener un ordinateur, lors de l'exécution de ces instructions, à mettre en œuvre le procédé selon l'une des revendications précédentes.

12. Support de données lisible par machine (61) sur lequel est stocké un programme informatique selon la revendication 11.

13. Dispositif (60) qui est conçu pour mettre en œuvre le procédé selon l'une des revendications précédentes 1 à 10.

**Fig. 1**

**Fig. 2**

**Fig. 3**

EP 3 956 820 B1

**Fig. 4**

EP 3 956 820 B1

**EP 3 956 820 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 109615073 A
- US 2019095798 A1

**In der Beschreibung aufgeführte Nicht-Patentliteratur**

- **LIU, HANXIAO ; KAREN SIMONYAN ; YIMING YANG.** DARTS: Differentiable architecture search. *arXiv:1806.09055,* 2018
- **FALKNER, STEFAN ; AARON KLEIN ; FRANK HUTTER.** BOHB: Robust and efficient hyperparameter optimization at scale. *arXiv:1807.01774,* 2018
- **OLAF RONNEBERGER ; PHILIPP FISCHER ; THOMAS BROX.** U-Net: Convolutional Networks for Biomedical Image Segmentation. *arXiv: 1505.04597,* 2018